Europäisches Patentamt

European Patent Office

Office européen des brevets

(11) Publication number: **0 495 310 A2**

# EUROPEAN PATENT APPLICATION

(21) Application number: **91311870.9**

(22) Date of filing: **20.12.91**

(51) Int. Cl.5: **G06F 9/44**

(30) Priority: **17.01.91 US 642745**

(43) Date of publication of application:
**22.07.92 Bulletin 92/30**

(84) Designated Contracting States:
**DE FR GB**

(71) Applicant: **International Business Machines Corporation**
**Old Orchard Road**
**Armonk, N.Y. 10504(US)**

(72) Inventor: **Campbell, David Lunn**
**1501 Fairfield Drive**
**Austin, Texas 78758(US)**
Inventor: **Cordell II, Robert Ouentin**
**1331 Sugar Creek Boulevard**
**Sugar Land, Texas 77478(US)**
Inventor: **Hambrick, Geoffrey Martin**
**2502 Chowan Way**
**Round Rock, Texas 78681(US)**
Inventor: **Vakharia, Dinesh Javantilal**
**801 Bluff Drive**
**Round Rock, Texas 78681(US)**

(74) Representative: **Tomlinson, Kerry John**
**Frank B. Dehn & Co. European Patent Attorneys Imperial House 15-19 Kingsway**
**London WC2B 6UZ(GB)**

(54) **A process control method and apparatus.**

(57) A Process Control Framework is disclosed as an environment in which processes and their products can be formally defined as objects in a machine readable form, called a Process Control File. The Process Control File is used by a Process Control to determine the next action to be performed on the set of objects selected by the user. Where the action is machine executable, the Process Control is able to actually invoke the system command itself to perform the task. This gives rise to a unified user interface where the user can work exclusively with high level actions to Process Control File objects instead of having to remember the specific system level commands. Further, the objects have attributes associated therewith which are stored separate from the objects themselves. This allows for a single object to be accessed and used by multiple processes, both internal and external to the disclosed Process Control Framework. The object-oriented approach allows for access privileges for users, roles, and access rights for object classes to be defined and maintained by sending messages to retrieve or set the properties of these object classes. An object-oriented user paradigm for viewing and manipulating data and tools is reinforced with a true object-oriented system managing the data and tools.

14

| USER INTERFACE | 15 |

API 16

| PROCESS CONTROL | 17 |

API 18    API

| PROCESS CONTROL FILE 19 | | SYSTEM COMMAND 20 |

| PCF OBJECT 21 | | PCF OBJECT 21 | | PCF OBJECT 21 | | SYSTEM FILE 22 | | SYSTEM FILE 22 | | SYSTEM FILE 22 |

FIG. 2

The present invention relates to a method and apparatus for managing processes and maintaining process integrity, and more specifically to a method and apparatus for providing a computer assisted process development system.

Every creative venture, from writing a great work of literature to coding a world class computer operating system, involves a process. Conversely, every process, formal or informal, is composed of a certain number of steps geared towards creating a product.

The tight coupling between process and product means that the first step towards developing a quality product is to define a "quality" process. In fact, having a quality process is essential to having a high quality product, since a quality process not only produces high quality products, but is also both repeatable and measurable.

Repeatable means that the process is understood well enough that the steps can be carried out again and again (and still produce the same quality products). Measurable implies that the qualities of the products can be stated in objective rather than subjective terms such that clear progress with respect to the goal can be determined.

Thus, a quality process is a well defined process. One way to formally define a process is to describe it in terms of a state transition diagram, where states represent process stages and transitions represent flow of control from one state to another. A state can be precisely described as a condition based on the current values of attributes associated with objects known to the process. Transitions are actions that use and modify the attributes in the course of their execution, thus changing the state.

There is an interesting side effect of having a well defined process: defects in the product can be traced back to defects in the process. This is true because either the process is not properly defined in the first place, or the process is not controlled. Therefore, we need some automated way to ensure that the process is properly defined and being followed.

An example of process definition and control is the procedure of building a computer program (software) capable of running or executing on a computer (hardware). The end result of this process, the computer program, is generally derived from numerous source code modules, each module being capable of performing a specific, or logically related group of, task(s). These individual source code modules, which are generally written by human beings in a high level computer programming language, such as C or Pascal, must be further refined into a series of computer commands and data which can be understood by the computer hardware. After this refinement step, also known as compilation and/or assembly, the individual modules must be combined into a machine executable program through a step known as linking or binding. This linking (binding), besides creating a machine executable program, further attempts to resolve any external addressing references which were not known to the compiler or assembler during the prior compilation or assembly step.

The management of this process becomes increasingly difficult as the number of individual programmers, whose source code modules are being used in this build process, increases due to increased functionality/complexity being placed in the resultant computer program. If a subsequent change is made to a source code module (e.g. to fix an error in the program), that module, and possibly other related modules, will have to be recompiled and relinked. However, some modules do not require the recompilation step and can be used, unmodified, in the relink step. Defining and controlling these module interrelationships can be tedious and time consuming. Computer tools exist in the marketplace today which assist in this process definition and control. "Make" is a utility program which controls the build process of computer programs. "Makefiles" are files used by Make containing specific build instructions for the computer program which is being generated. However, the tools available today do not provide for a general purpose process control framework, which is required in light of the emphasis today on object-oriented programming.

Object-oriented programming, and its related support tools, further exemplifies and amplifies the need for a system of controlling a process. Before examining this need for process control, we must first understand what object-oriented programming is all about. Conventional software programming techniques generally have a series of procedure, or subroutine, calls to perform a given task. Communication between these procedure calls is achieved by passing parameters or data structures which contain the information which the computer program is to manipulate. The problem with this technique is that there can be too much data transmission between the procedure routines. If this occurs, one solution is to instead put these routines into the data itself. Instead of building modules around computer tasks and distributing data structures between the resultant routines, object-oriented design does the reverse. It uses the most important data structures as the basis for modularization and attaches each routine to the data structures to which it most closely relates.

Object-oriented technology is the construction of software systems as structured collections of abstract data type implementations. In terms of an object-oriented approach, an integrated project support environment can be defined as follows:

"Classes" represent an abstract data type. For an integrated project support environment classes may be the definition for source files, compilers, documentation, data flow diagrams, and the like.

"Objects" are the instance of a class. Objects represent real entities within the environment. Objects in an integrated project support environment may be users, groups, data consisting of requirements, specifications, designs, code renderings, images, reports, publications, etc., tools, applications, and methods. In fact, everything can be defined as an object within the environment, including the environment itself.

"Methods" define the operations that can be performed on objects. Methods sometimes are called "actors" and are normally associated with classes. For an integrated project support environment, methods are essentially the tools that operate on the data objects. Methods specify the rules by which they operate. For example, the rule for a C compiler is that it will only accept C source file objects. All other objects would be rejected. The definition of a method in an integrated project support environment is called the tool's schema definition set.

"Messages" are the mechanism by which methods are invoked in an object-oriented environment. Messages are passed to the method and the method determines if the message is appropriate, e.g., can be executed, by that particular method.

Classes are organized into a "hierarchy". This means that classes are defined as belonging to other classes ("superclasses"). This is an important concept in an integrated project support environment because it allows the definition of components of a system to be decomposed into their constituent parts. Given a type hierarchy of object classes, "inheritance" provides the ability for one class to inherit properties of its superior class.

"Composite objects" are objects that are composed of more than one object. In an integrated project support environment, composite objects can be thought of as the components of the system that are made up of other objects.

The "object manager" is the mechanism by which all objects are controlled and maintained in the system. This is the basis on which an object-oriented integrated project support environment is constructed.

The emphasis is on structuring a system around the classes of objects it manipulates rather than the functions it performs on them, and on re-using whole data structures, together with the associated operations, rather than isolated routines.

The environment can be viewed as a set of objects that can perform operations or upon which operations can be performed. Classes and type hierarchies for objects can be defined to simplify the instantiation of a set of objects. Behavioral characteristics of objects can be defined as methods and operations can be mapped to appropriate methods for a particular class of objects. Thus, the object-oriented approach provides a high-level of commonality and consistent sharing of services through inheritance. This programming methodology is also discussed in Meyer, B., "Reusability: The Case for Object-Oriented Design", IEEE Software, Vol. 4, Number 2, pp 50-64, March, 1987 and Stroustrup, B., "What is Object-Oriented Programming?", IEEE Software, pp 10-20, May, 1988.

Using these object-oriented systems with the tools and methods previously discussed is not feasible due to inherent architectural differences in the methods of maintaining the system. The following discussion details the deficiencies which exist in today's computer-assisted software engineering (CASE) environment.

In a system using Make to manage its processes, once access is gained to the Makefile, then access to every object listed therein is provided. No concurrency controls are provided, i.e., Make does not prevent simultaneous access and/or update to Makefiles.

Make does not dictate the tools that are used in the environment, as long as they are executable AIX ( a type of computer operating system: Trademark of IBM Corporation) commands. However, Make cannot accommodate any arbitrary process (one representable by a state transition diagram as described previously). This is because the only attribute considered for the "state" is the last update to the file representing the object.

Makefiles can be considered to be object oriented. However, only the source list and build process associated with an object are stored. Controlling other processes and storing other attributes either requires multiple Makefiles or multiple "list" variables in a single file. In either case, information associated with a given object is spread out (across files or lists) rather than consolidated in one place.

Makefiles cannot be updated under the control of Make. Therefore, Make does not address data integrity or error recovery issues in any way. Every process that needs to be controlled must be "recast" in terms of dependencies of actual operating system files. Therefore, Make is not easy to integrate.

Makefile syntax is positional and contains many special purpose macro symbols. Not all symbols are valid in all three "sections" of a Makefile (the suffix rules, macro and dependency definitions). For example, "$@" represents the current target name; "$$@" has the same meaning except it is only valid on dependency lines. The symbol "$?" stands for the "list of source files that have been modified more recently than the target". The symbols "$*" and "$<" only have meaning in suffix rules. The net result is that Makefiles are often hard to read and understand and therefore, hard to use.

If one process has already been integrated using Make, then controlling subsequent processes requires shifting to multiple Makefiles or list variables. Either way requires that another utility (such as libmake, an AIX operating system utility) control the processing.

Make only works with ASCII makefiles. There is no way to "compile" Makefiles or otherwise store them in a database for more efficient execution. The user interface is always command line driven. Make was not written using coding principles that allow changes to the data storage facilities and/or user interface look-and-feel.

The build process associated with a target object can be explicitly coded such that it sends mail, (or any other action). However, Make does not support a facility for automatic invocation of events (such as sending mail, etc.) when a Makefile object is updated.

Make does support limited reusability. For example, "include" files can be reused across several makefiles. "Macro definitions" allow for complex strings to be encoded once and substituted wherever needed. "Rules" provide for "attribute inheritance". However, the only attributes that can be "inherited" are the dependencies and build process. Further, inheritance is based on the filename suffix only. Therefore, Make does not fully support reusability of object attributes.

Since Make does not support controlled access to the associated Makefiles, it cannot be used by other tools to access Makefile information. Any tool can read a Makefile, but it must provide its own parser. Therefore, visibility to external tools is not fully met.

In summary, the Make utility cannot be considered to provide even full process control, due to the difficulty involved in integrating processes other than the one for which it was originally intended (i.e., executing commands to bring out-of-date targets up-to-date).

The Atherton Software BackPlane (hereafter called Atherton) provides an object oriented "integration" framework where attributes as well as methods can be associated with objects to provide process control. A summary of its major shortcomings are the failure to adequately provide for the following:

(i) Accommodation of processes and tools, (ii) Independent of platforms, (iii) Independent of technology, (iv) Notification and triggers, (v) Reusability of object attributes, and (vi) Scalable across a wide range of project sizes.

Once an object comes under control of Atherton, no outside access is permitted. The reason outside access is disabled is that Atherton provides its own built-in version control and problem tracking sub-systems. By providing this functionality, Atherton dictates some of the tools that must be used and some of the processes that are controlled; therefore it does not fully accommodate all processes and tools.

Since Atherton provides its own proprietary object-oriented database and its own user interface "look-and-feel", it limits a user's ability to take advantage of advanced technologies on the horizon. For example, windowing systems such as X-Windows (Trademark Of Massachusettes Institute of Technology) may give way to a more advanced user interface; "semantic networks" may become the database technology of the future. It is thus not independent of platforms (computer hardware) or technology.

Atherton does support a notification facility where mail can be sent to the owners of two objects that are "linked". However, since Atherton does not support the invocation of any arbitrary method associated with the linked objects, it does not fully meet the requirement of notification and triggers.

Atherton supports logical attribute inheritance to provide reusability. For example, a "c program" object can be defined that provides default attributes for "instances" of c program objects (like foo.c). However, Atherton only supports a single hierarchy. It does not support multiple inheritance, where an instance can inherit attributes from many hierarchies. In a true object-oriented system, multiple inheritance is needed to define classes in terms of more than one parent class, and hence the term multiple inheritance. Multiple inheritance would require rules for both parents having the same property. A single inheritance model such as Atherton does not require this level of sophistication and complexity, since there is only a single parent in the inheritance tree. Therefore, Atherton does not fully support reusability of object attributes.

In summary, Atherton provides far more functionality than Make and facilitates some degree of general purpose process control. However, the shortcomings summarized in this section show that Atherton does not provide an adequate solution to process control.

Other similar products exist on the market. For example, Cadre has a configuration management toolkit called Teamwork/MCM. Sage has its own Make and version control system called Polymake and PVCS, respectively. Each of these offerings has similar serious shortcomings.

A Process Control Framework is required to fully achieve the benefits of process control and overcome the deficiencies in existence today.

According to the invention, a Process Control Framework is an environment in which processes and their products can be formally defined as entities, or objects, in a machine readable form (hereafter called a Process Control File). The Process Control File (PCF) is an internal structure used by a Process Control to determine the next action to be performed on the set of objects selected by the user. Where the action is machine executable, the Process Control is able to actually invoke the system command itself to perform the task.

This gives rise to a unified user interface where the user can work exclusively with high level actions, which in turn interface to Process Control File objects, instead of having to remember the specific system level commands. More importantly, the Process Control is simple minded. It can only follow a well defined process that is both repeatable and measurable. Therefore, it can support a quality process. The aforementioned user interface, process control, and internal structure comprise three levels of integration in the Process Control Framework.

Gaining control of a process is itself a process called integration. The first step is to prioritize the processes that will be integrated. Then, for each process, the following steps are taken:

1) determine the objects and associated attributes to be maintained in the Process Control File,

2) migrate the data from its current form into a Process Control File, and

3) invoke tools, by the Process Control, to act on the Process Control File objects and attributes.

The present invention provides solutions for the following requirements:

1. Access and concurrency control: Concurrent access to Process Control Files and associated objects provides access only to authorized users.

2. Accommodation of processes and tools: The Process Controller does not dictate the processes controlled nor the tools that can be used.

3. Consolidation of object attributes: Unique attributes associated with an object are consolidated in one place within the Process Control File.

4. Data integrity and error recovery: Process Control File data is protected from loss due to unforeseen circumstances as much as is possible.

5. Distribution of objects: Objects are maintainable in separate Process Control Files.

6. Ease of integration: The Process Control Files support a wide variety of attributes that enable new tools to be quickly developed and new processes to be controlled. The Process Control Framework minimizes the amount of learning necessary to integrate sophisticated tools and processes.

7. Ease of use: End users are able to easily encode and read the attributes of objects in the Process Control Files. The Process Control Framework minimizes the amount of learning necessary to use sophisticated tools and processes.

8. Efficiency of execution and storage: The Process Controller is efficient; the Process Control Files are concise.

9. Independent of integration: Controlling new processes, supporting new tools and adding new attributes to objects stored in Process Control Files have no effect on existing tools and processes.

10. Independent of platforms: Processes controlled are not limited based on platform. Manual tasks are also "controllable" through instructions and support for status modification.

11. Independent of technology: The Process Controller is independent of the underlying database format or user interface "look and feel".

12. Notification and triggers: The Process Controller provides for actions (including interprocess communications) to be invoked when objects change states.

13. Reusability of object attributes: The Process Control File architecture supports sharing attribute values across objects.

14. Scalable across a wide range of project sizes: The Process Control framework imposes minimal overhead on small projects, while maintaining performance on large ones.

15. Visibility of external data: Tools in the Process Control Framework have access to data stored outside of the Process Control Files (subject to access controls).

16. Visibility to external tools: Other tools external to the Process Control Framework have access to objects stored in the Process Control Files (subject to access controls).

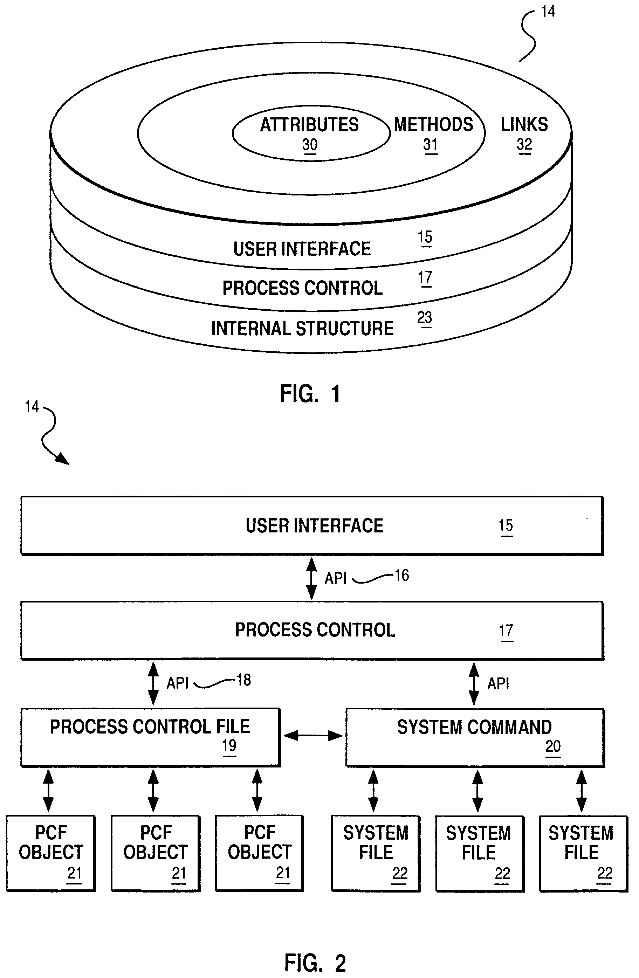

A Software IC concept relevant to the background of the present invention is discussed by Brad Cox in his book Object Oriented Programming: An Evolutionary Approach, Addison-Wesley, Reading, MA., 1986. Using this model, the Process Control requires interfaces (Application Programming Interfaces, or API's; see Figure 2) to the Process Control Files, System Commands and User Interface. However, there is not enough detail given by Cox to determine how this architecture could provide all the requirements of a Process Control Framework, as previously outlined.

Accordingly, we provide an architecture to achieve these requirements. An integrated framework architecture has been developed with three distinct components that provide the three previously described three levels of integration. These three components are attributes, methods, and links. The attributes of an object describe product and control information used to drive the development process, where methods are the actual programs that can be invoked against the internal objects. Links associate an internal object accessible only with the object manager to an external object accessible to other processes within the system. Methods interact with both the attributes of internal objects and/or links to external objects, and serve as the "glue" that ties the object manager to the resident system.

The Process Control File component makes direct use of System Commands. A Process Control File, as previously stated, is a collection of objects. An object is a named collection of meaningful information called attributes, which associate a name with a value. An attribute value can be derived and interpreted in many ways, from a simple string to an embedded object definition. The derivation and interpretation of an attribute actually requires the services of the underlying system, as will be more fully described hereafter.

Attributes can be explicitly encoded within the object itself or inherited from another object. There are also many ways in which an object can specify the other objects from which it will inherit attributes. Inheritance is but one of many reasons to reference another object. The reference interpretation of an attribute is derived from three components, thus providing a high degree of flexibility in how a reference may be accessed within the three levels of integration.

It is therefore an object of the present invention to provide a process control system.

It is a further object of the present invention to provide process control in a computer assisted software engineering environment.

It is yet another object of the present invention to provide a process control system that is flexible.

It is yet another object of the present invention to provide a process control system that is reusable.

It is yet another object of the present invention to provide a process control system that is interoperable with external processes.

The foregoing and other objects, aspects and advantages of the invention will be better understood from the following description of a preferred embodiment of the invention with reference to the figures listed below, in which:

Figure 1 is a high level illustration of the process control system.

Figure 2 is an illustration of the three levels of integration contained within the process control system.

Figure 3 is an illustration of the three components contained within the process control system.

Figure 4 shows object selection through boolean expression selection.

Figure 5a-5f details the overall system syntax.

Figure 6 shows various types of variable assignments.

Figure 7 shows attributes having multiple values.

Figure 8 shows environment variables and object attributes.

Figure 9 details the interrelationship between shell scripts and executable methods.

Figure 10 exemplifies embedded object attributes.

Figure 11a-11b is an example of how policies govern and control processes.

Figure 12 shows the interrelationship between internal and external objects.

Figure 13 is a system level diagram showing a CASE environment model.

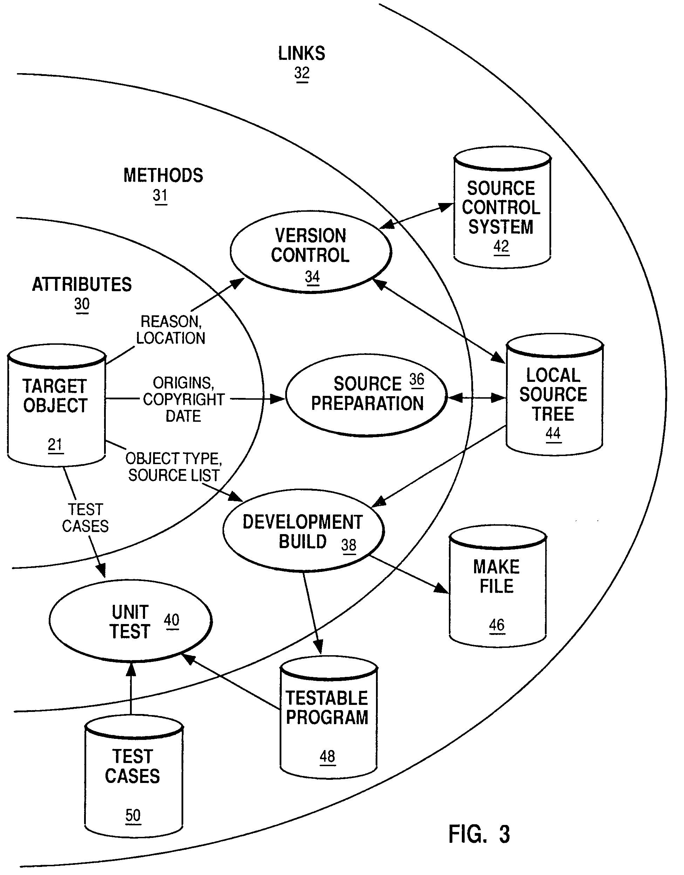

Fig. 1 shows the system overview of the Process Control Framework 14. This Framework 14 has three levels of integration, the user interface level 15, the process control level 17, and the internal structure level 23. The Framework 14 further has three types of components defined therein, comprising attributes 30, methods 31, and links 32. The specifics of the integration levels and types of components are further shown in Figures 2 and 3, which will now be described.

Referring to the Process Control Framework 14 of Fig. 2, a user interface level 15 communicates with a process control level 17 through an application programming interface, or API, 16. The Process Control 17 operates on Process Control Files (PCF) 19 using a separate API interface 18. Each PCF 19 is just that: a file (or files) that is (are) uniquely addressable. These Process Control Files are used, as well as the system commands 20, in building the internal structure 23 of Fig. 1. The system can store the detailed structure of the data associated with an object 21 within the Process Control File 19 of Fig. 2. Although the object and associated data structure is defined later, it is key to understand that the PCF 19 can contain objects, attributes associated with these objects (as exemplified in Fig. 3 at 30), and detailed data structures, thus allowing and supporting the three levels of integration.

File permissions are used to provide PCF level access control. System level file locking is used to provide PCF level concurrency control. The access and locking provided depends on whether the PCF is opened for read or write. If access is denied at the PCF level, then it is denied for all object information stored within the PCF.

The PCF component provides data integrity and error recovery through standard database techniques, for example, two phase commits with transaction logging. This implies that there is a function to recover a PCF from an older "uncorrupted" version and one or more transaction logs.

The primary unit of access in the Process Control Framework is the object 21. Users communicate with objects through messages. Normally in object oriented systems, a message consists of an object and an associated action. The disclosed architecture is unique in that a message can be passed to a single object or an entire set of objects. Likewise, a message can specify a single action or a set of actions that is/are defined for object(s) accessed. We will now describe the features of objects and how they will meet various requirements.

Referring to Fig. 3, an object 21 is a named collection of attributes 30 that is stored in a Process Control File (see also Fig. 2 at 19 and 21). An object name must be unique within the PCF (although there is no requirement that the name be meaningful). Thus, the unique "address" of an object is formed by combining the PCF name and the object name. Knowing the object address allows direct access, which simply locates the object and performs the specified action(s). Note that an action is a list of commands, and a method is a named action.

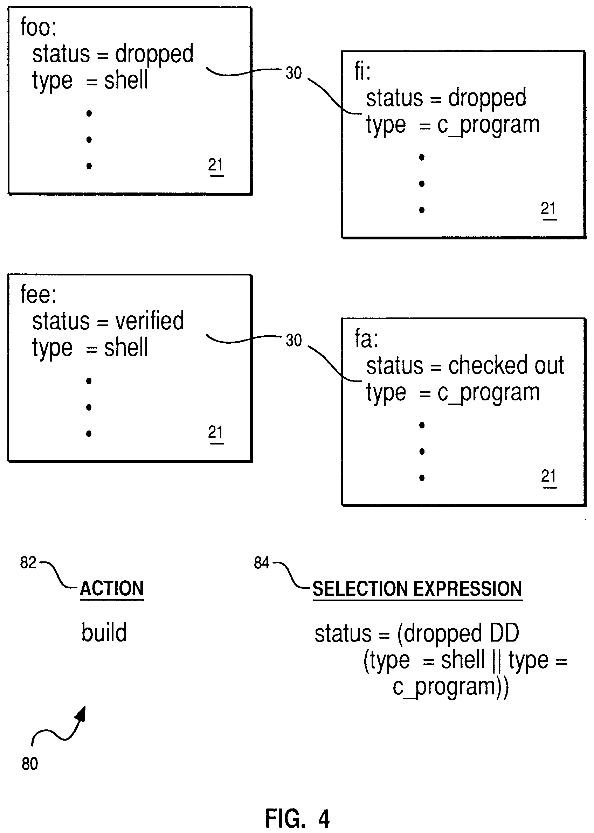

However, objects can also be accessed indirectly, assuming the user specifies a conditional expression that describes the state of the object's attribute values. Indirect access means that the PCF is scanned by conventional software programming techniques to find objects that match a specified selection criteria (a Boolean expression based on attribute values). However, this does not imply that objects are scanned in any particular order. What indirect access provides is ease of use, since an entire collection of objects can be selected using an expression. As illustrated in Figure 4, objects 21 having attributes 30 indicating the status, type, etc. for each object would be scanned when a message 80 is encountered by the system. This message 80 will 'build' (the specified action 82) all 'c_programs' or 'shells' that are 'dropped' (the attributes 30 for each respective object 21), as defined in the selection expression 84 contained within the message 80. The associated action(s) 82 can be executed in the background to allow the user to perform other tasks.

The aforementioned build process serves as an excellent example of how integration works: First, the information needed to control the build is determined. This includes the list of source files upon which the target objects are dependent and the actual build process that is to be executed when a source file is determined to be out of date with respect to the target. This information would become attributes of the target objects. Then, since there is a large number of existing Makefiles, a tool converts the Makefile data into the PCF format. Finally, a tool scans the source list of a target object, "builds" each source object that is not already built, and checks the target against each source object to see if the target's build process needs to be invoked. At this point, the Process Control Framework is being used to control the build process.

File level access and locking may be too large a granularity, since multiple objects will probably reside within a single PCF. The PCF architecture allows for two types of object level access that are based on the reserved attributes, access permissions and access lists.

The access permissions attribute is functionally equivalent to AIX file permissions (i.e. user, group and others), except it is at the object level. When access permissions do not provide enough explicit control, specific userids and/or groups are associated with read/write/execute permissions. These are explicitly listed in the access list attribute to facilitate more fine-grained access control. There are performance reasons for providing both access permissions and access lists. Access permissions are efficient but provide only three predefined "classes" of users. Access lists are flexible, but can be inefficient if long lists are provided (and the current user's userid happens to be listed at the end).

Concurrency control at the object level is provided by special lock owner attributes that are maintained within the object. These attributes describe the process that currently has the object locked and for what purpose it is locked (read, exclusive read or read/write). Locks can be explicitly released by appropriate setting of the lock owner attributes; they can also be implicitly released, such as when the owning process no longer exists.

Triggers are events (messages) that get invoked whenever a given object is modified. For example, the owner of an object may want to be notified by mail whenever it is checked out (or in, etc.) of a master program/data repository. Special notification list attributes are used to record and handle the notification process. A given entry in the list consists of a message and a trigger expression. A trigger expression is a condition based on attributes associated with the object. When an object is modified and a trigger expression in the notification list is met, EP the associated message is executed. Triggers can be explicitly removed through modification of the notification list. They can also be implicitly removed, such as when the object and/or action associated with the message is not found.

To provide the same explicit control for an entire PCF where the filesystem does not provide access lists, the PCF itself is considered to be an object and can be encoded within the PCF file. Its name is equal to the PCF name itself. If present, its access permissions and access list attributes can override those from the filesystem (but only if access to the PCF is allowed in the first place). Therefore, logical access to the PCF is contingent on the object representing the PCF, even though physical access is allowed by the operating system.

The file level locks can be provided for systems that do not support them directly by setting and clearing the lock owner attributes in the PCF object. However, this does not of itself prevent access by external tools. In any case, PCF and object level access, locking and notification depend on accessing attributes associated with an object. The next section will explain this concept in more detail.

An attribute 30 of Fig. 3 is always associated with an object 21. It can be equated with a field in a record. All access to an attribute has to come through the object itself. If a user does not have access to an object, then he cannot access any of the attributes contained within the object. Attributes can be accessed either implicitly through a "next attribute" function, which is a sequential access to attributes without needing to know the attribute name, or explicitly by name (recall that an attribute consists of a name/value pair). Attribute level access control is not directly supported by the Process Control File architecture. However, it can be "simulated;" i.e., an attribute can be treated as if it were an embedded object (i.e. a list of attribute value pairs that is wholly contained in the value itself -- this subject will be later described in more detail). In any case, it is the value of an attribute that conveys the real information. There are two ways to look at a given attribute value. First is how the value is derived; second is how it is used. There are many ways to both derive and use attribute values. Both concepts fall under the System Command component of the architecture shown at 20 in Fig. 2, since the system is required to execute certain tasks in order to help derive and use the attribute values.

The Command architecture is geared toward treating attributes like variable assignments in most shell languages (hereafter called the shell), such as the Bourne, C, or Korne shell. Within the shell, there are three ways that the "righthandside" of the assignment ( = ) can be evaluated in order to determine the effective value of the variable:

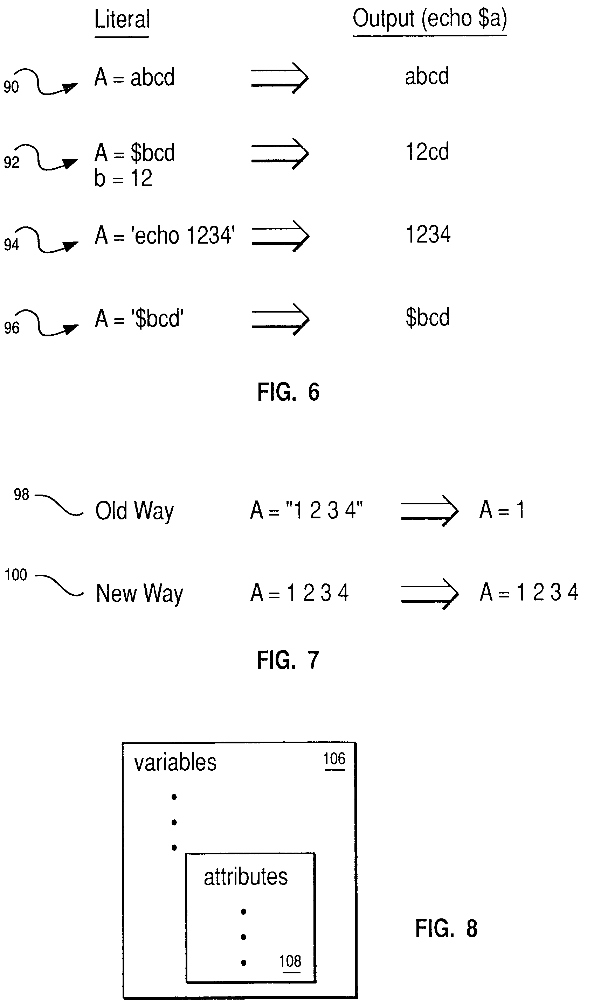

1) as the literal string represented by the value (i.e. what you see is what you get), as shown in Fig. 6 at 90 and 96;

2) as the string that results from substitution of any embedded variable expressions in the value, as shown in Fig. 6 at 92;

3) as the "standard output" string that results from executing the value, as shown in Fig. 6 at 94.

The Command architecture disclosed herein has added a fourth derivation as an extension: where variables in the shell are always single valued, attributes can be multivalued. In other words, each attribute value can be a list of values. The list can be treated as a whole, or each element can be separately derived (and/or interpreted as explained below). Referring now to Fig 7, prior methods of attempting to assign multiple values to an attribute would result in only the first value in the list actually being assigned, as shown at 98 where the resulting value of A is 1. By providing list support, the resulting assignment to A shown at 100 results in the entire list being assigned.

Supporting lists means that the shell assignment and substitution mechanisms are extended, not only to allow attributes to be treated as variables, but also to allow a variable to be multivalued (and either be treated as a whole or as individual elements). An additional extension is added to allow attributes in another object to be directly referenced for substitution (a detailed explanation of referencing is provided below).

Another effect of adding lists is that the normal shell quoting mechanisms used to encode lists ("" or '') will almost always be unnecessary. This is accomplished by not using whitespace to terminate a value, as does the prior art, but rather using either a 'newline' character or a subsequent attribute assignment to terminate a value. Let us now turn our attention to how a value can be used after it is derived.

The Command architecture supports seven ways that a value resulting from the assignment discussed above can be used:

1) as the literal string;

2) as the string after substitution;

3) as the standard output of the result of executing the value;

4) as a list of values;

5) as a list of executable commands;

6) as an embedded object definition;

7) as a reference to another object.

Note that the first four are exactly the same as the value assignment described above. The difference is that the seven interpretations found here are based on the usage of the attribute and require that a tool properly interpret the value.

One kind of "tool" is a special kind of executable attribute known as a "method" (those from "interpretations 3 and 5 above). Methods can be composed of four distinct kinds of commands to allow for varying degrees of flexibility and efficiency:

1. System commands are command strings that are directly executed by the operating system.

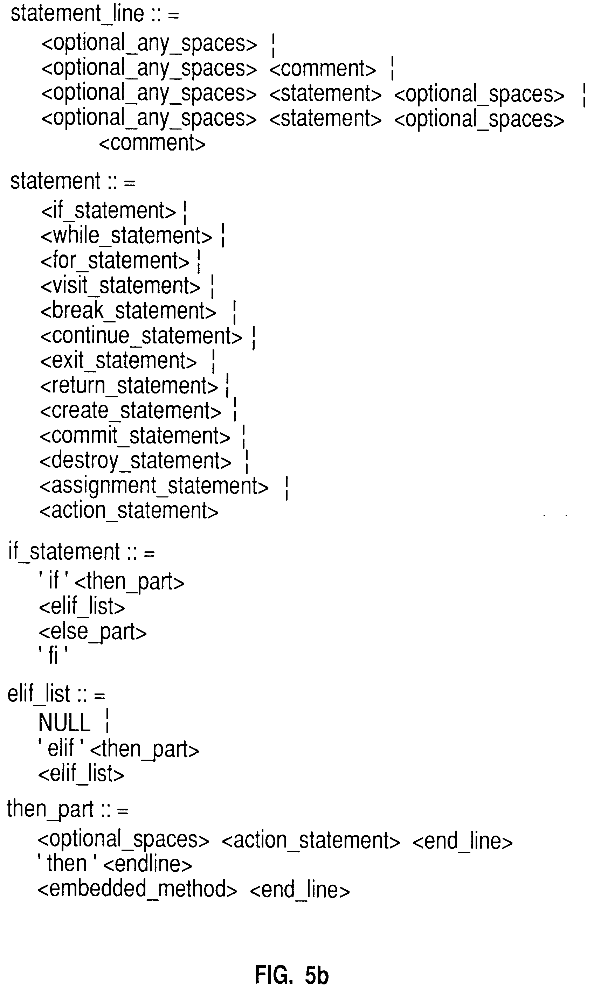

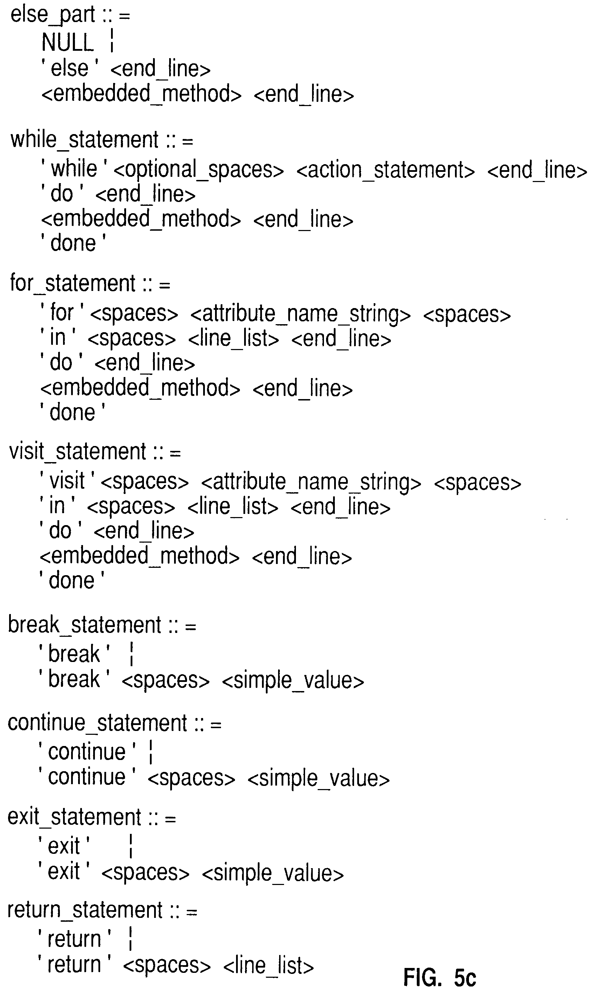

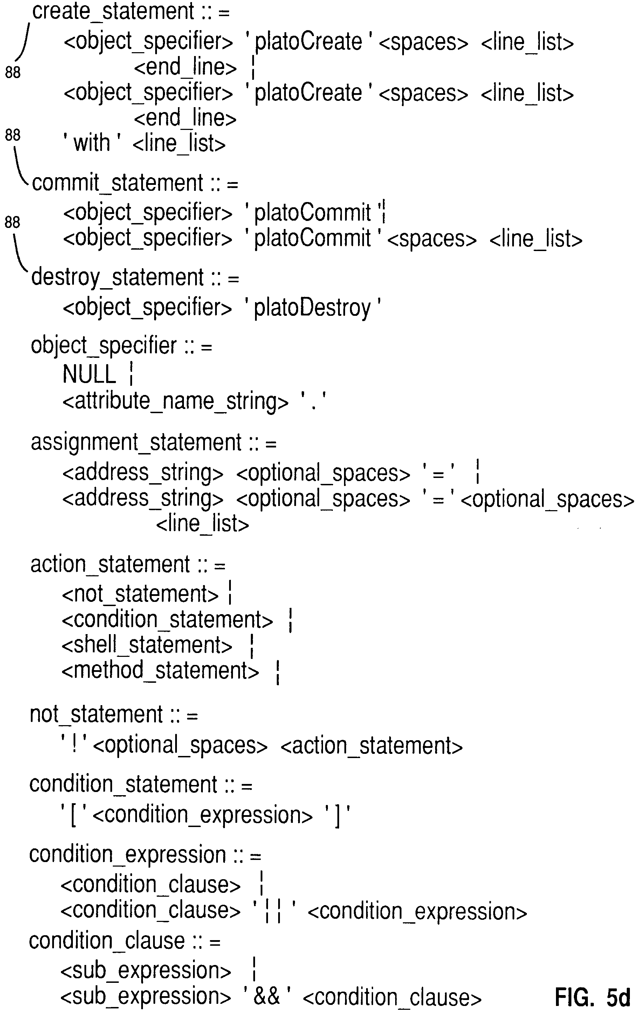

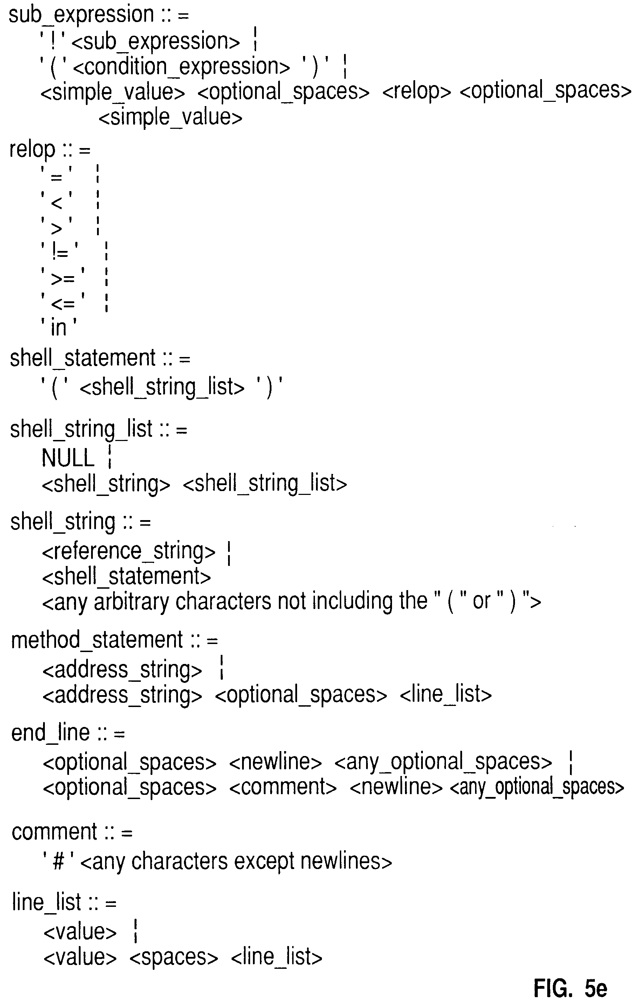

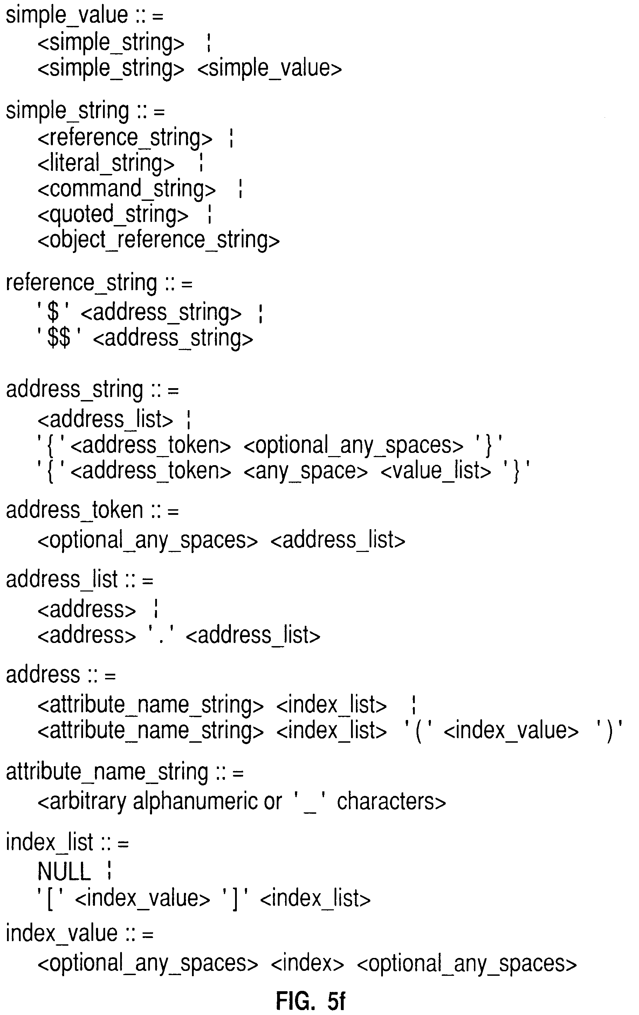

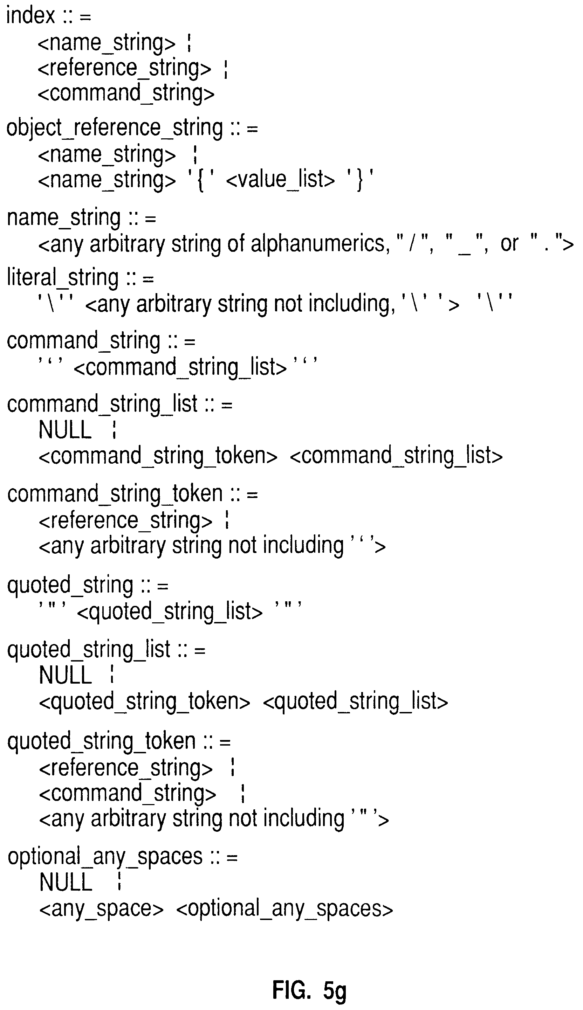

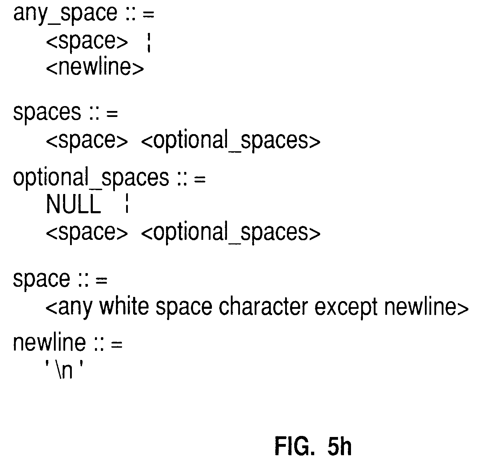

2. Internal commands are functions that are provided as part of the Process Control and as such can be more efficiently executed within the current environment. Examples would be commands such as destroy, create, or commit (see also Fig. 5c at 88 for the specific command syntax).

3. Interpreted commands are references to other attributes that are to be treated like shell functions; i.e. they are interpreted as executable commands (and may contain any of these four types of commands).

4. Compiled commands are references to other attributes that have been previously "compiled" and "linked" (presumably from an interpreted command) for more efficient execution.

Note that the Process Control File itself cannot determine if a command is valid when it is stored. That is the responsibility of the System Command component 20 at Fig. 2 when the value is derived or used.

Embedded objects are important in that they allow a user to encode complex information inside of an attribute value without resorting to positional syntactic devices (like "colon separated" values). One of the best features of objects is that they maintain the attribute name along with the value so that the information is more meaningful.

The Command architecture provides embedded objects for another reason: the "object" that is embedded within the attribute value is only accessible through the parent object. Further, it can override the access permissions and access list attributes of the object itself, providing some measure of attribute level access control (but not concurrency control). Since overriding attribute values is usually associated with the concept of inheritance, we leave it to a later section to explain this concept more fully (and return to the PCF architecture).

At this point, we know how an attribute value is derived and how it might be used, but not how it gets associated with an object in the first place. This subsection will describe two ways to associate attributes with objects that are supported within the framework. Both of these are described in terms of "inheritance" of attributes from some other object.

The most obvious way to associate attributes with an object is to encode them right along with the object definition. Since we are describing these methods in terms of inheritance then it makes sense to call this type: "none", since (so far) no attributes were inherited from any other object. If no inheritance mechanism was available, then it would get rather tedious to encode objects. Every single attribute would need to be specified every time, even if other objects had exactly the same list. For example, it seems reasonable that all C program objects share attributes such as compile process. It is also logical that many objects will share similar source code control attributes such as lpp, node, platform, command, etc.

The PCF architecture allows for logical inheritance. Logical inheritance is achieved by declaring a reserved attribute called "type" that is a list of object references (interpretation 7 as listed above) from which the target object will inherit attributes. Whenever an object is retrieved using logical inheritance, each object that is referenced in the type attribute is also retrieved. Attributes from the type object that are not explicitly encoded or already inherited (i.e. overridden) become part of the current object definition. Since a "type" object can also specify a type attribute, and since more than one object can be referenced, the PCF architecture supports multiple hierarchical inheritance. The benefits of logical inheritance are important, because as many groupings as desired can be created to minimize redundancy within a PCF. Only the attributes that are unique to a given object need be explicitly encoded. However, what about between Process Control Files? Luckily, an object reference can address objects in other Process Control Files. The next subsection will describe references in more detail.

Although the concept of reference makes the most sense in the context of inheritance through the type attribute, there are other good examples (for example, the build process interprets the source list attribute as a list of references to other objects). In general, a reference implies accessing the object specified for some purpose (like getting a specific attribute value for variable substitution). However, there is a high degree of flexibility in how a reference may be accessed. For example, there may be a need to disable the inheritance of attributes for the object referenced. Further, a specific PCF (or list of them) may need to be searched in order to locate the object. All of these possibilities add power, but they also add complexity and create additional keystrokes for the user.

To help ease the burden to the user, there is a well defined set of default conditions for references. These defaults are based on the referencing object and the reference itself. In general, a reference has three components:

1) the object name;

2) the inheritance status (which controls whether inheritance is enabled or disabled); and,

3) the list of PCF names to be searched (in the specified order) in which the object should be found.

The simplest reference is simply the object name itself. In this case, the inheritance status is taken from the referencing object itself. The list of Process Control Files that are searched defaults to the list of names specified in a special environment variable (that can be overridden within the current object). Note that when the PCF list is specified, only the named Process Control Files are searched and this overrides the environment variable for "recursive" references.

Support for references means that objects can be distributed across different Process Control Files that may reside on separate machines. Further, this implies support for scalability, since large projects can be broken up into manageable "pieces." Each "piece" is represented by a separate PCF. Small projects do not suffer performance degradation that can be caused when coexisting in the framework with a large project. Still, each reference can refer to common objects (stored in yet another separate PCF).

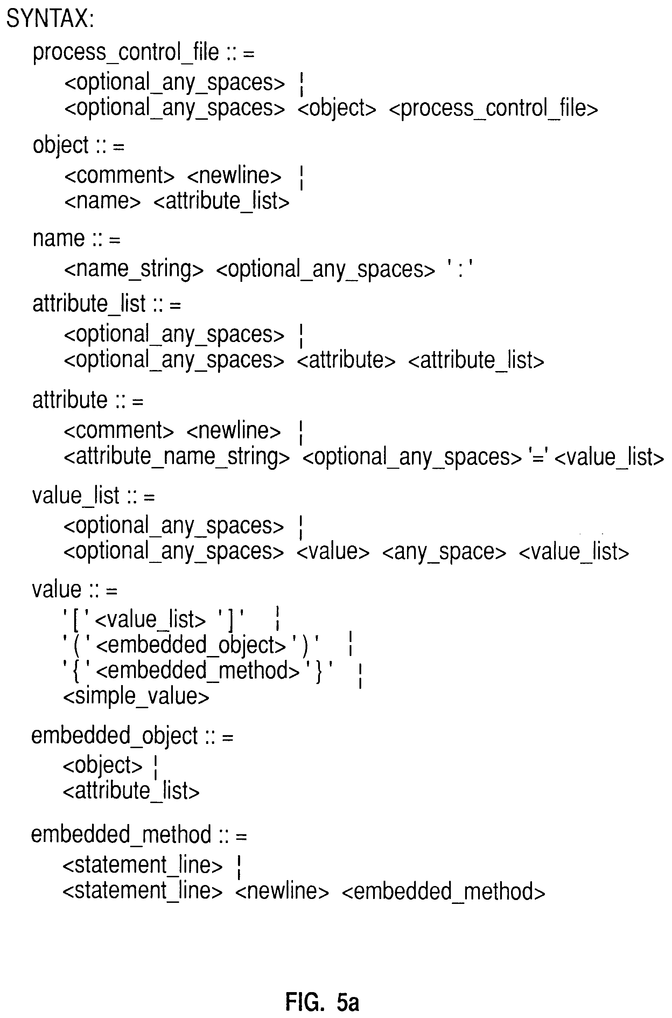

The details of the Process Control File syntax in the preferred embodiment is shown in Figures 5a-5f, using a Backus Naur form(BNF) definition, the BNF grammar being commonly known in the computer arts.

The objects defined can be described as stanzas in PCF format. Stanzas are nothing more than a named collection of attribute-value pairs. The values depend on the particular object that is represented by the stanza. For example, if a user was responsible for a file called foo.c, she or he might encode it in a PCF file as follows:

```
foo.c
        type=c_program
        lpp=bos
        node=3.1
        path=R2/cmd/foo
        owner=myuserid
        component=cmdfoo
        delta=""
        problems=""



        reason=""
        status=""
```

Remember that the filename attribute serves as the stanza name. Also note that the delta, problems, reason and status attributes are not persistent (i.e., they change every time the files are dropped). These values only need be filled in when the file is actively under development (in which case the status would be non null).

There are several reasons for settling on this PCF syntax, five of these will be discussed below. In summary, PCF files are:

1) readable;

2) concise;

3) maintainable;

4) extendable;

5) compilable.

Attribute files consist of named stanzas that group related attribute-value pairs. The attribute name serves to document the meaning of the associated value, and makes them far more understandable than the "equivalent" colon separated form.

To illustrate, the following example shows the above stanza in a colon separated form:

foo.c:c__program:bos:3.1:R2/cms/foo:myuserid:cmdfoo:::::

Notice that it is almost impossible to understand the meaning of this entry without a good memory of the stanza format.

The keyword, rather than positional nature of PCF files also means that null valued attributes need not be encoded at all, reducing the number of keystrokes required to enter a stanza. Colon separated files still require a colon (to mark the position, as seen above for the delta, problems, reason and status attributes); fixed format databases will still use the space, where variable length records will at least carry a pointer to the (nonexistent) string associated with the field.

PCF files also make use of a default stanza concept to help minimize the number of keystrokes associated with entering both the attribute name and the value. The user can encode common values as attributes within a default stanza that are inherited by stanzas that follow in the file, unless they specifically override the value.

For example, if the user owning foo.c was also responsible for foo.h and fee.c that were stored in the same source control directory, etc., then it would get quite tedious to repeat all the attribute-value pairs. Using the default stanza concept, the file might look like the following:

```
default:
        type=c_program
        lpp=bos
        node=3.1
        path=R2/cmd/foo
        owner=myuserid
        component=cmdfoo
        delta=""
        problems=""
        reason=""
        status=""
foo.c:

foo.h:
        type="c_header"
fee.c:
```

Neither colon separated files nor database formats support this default concept.

A stanza groups related attributes together in one place. Therefore, when a user needs to alter, delete or update information concerning a given object, she or he has only to find the corresponding stanza in the file. Taking advantage of the default stanza concept increases the maintainability even more, since changes to a single default stanza can affect a large number of "regular" stanzas.

Since attributes within a stanza are order independent, adding new attributes to drive another process does not affect existing processes at all. This is true even if the new fields are added between existing attributes. For example, suppose another toolkit operating on files was developed, such as a makefile generator. They hypothetical attributes derived (e.g., from source__list and build__process) could be placed anywhere in the stanza without affecting the original Toolkit. Further, deleting an attribute only affects those processes that use it. Even those processes that do use it might remain unaffected, if they can handle a null valued attribute (since nonexistent attributes return null when queried).

The fixed nature of colon separated files and database formats means that most changes to the entry require update to all processes using the file. The exception is colon separated files where new attributes are added to the end of the entry.

Even though stanzas are somewhat free form, they are still highly structured. A stanza can be equated with a record in a database, and the attributes as the fields. Every attribute carries its own "field name," meaning that attribute files can be easily translated or compiled into other forms.

The result is that attribute files can be used to provide the information storage component of toolkits that are easily converted to a more efficient form. Also, few (if any) user interface tools need to be written, since standard AIX utilities (like vi and pg) can be used to edit and display the attribute file format.

By treating attributes defined in a stanza as shell variables, any process executed by the Process Control can use these variables just as they would any other. All of the enhanced quoting mechanisms described above (except the single quote) substitute variables. Therefore, one attribute can refer to the value in another. A side benefit is that the action parameter of a Process Control command can use standard shell commands.

One problem with the default stanza concept known in the prior art is that it introduces a positional semantics, since all stanzas following a default stanza inherit its attributes (unless they are explicitly overridden). This means a misplaced stanza can be unintended attributes defined, sometimes with disastrous results.

Also, if a new default stanza is encoded, all of the attributes defined in the previous one are unset. This introduces a source of redundancy, especially when only one attribute needs to change (all of the others would still need to be encoded).

Default stanzas encourage reuse of attributes and make the file much more concise, but they do not support the kind of reusability that an inheritance hierarchy can provide. Therefore, the Process Control recognizes a special attribute called type that refers (optionally) to one or more other stanzas that will be used to supply values not explicitly declared in the stanza itself. Since more than one stanza name can be listed, multiple inheritance is supported.

The ability to interpret attributes like shell variables within an attribute value means that a stanza can not only override the value of its "parent," but also can edit it. This feature provides an extremely high degree of potential for reusability.

The Process Control provides stanza update capability by comparing the environment variables corresponding to attributes to the pre-execution values. If they have changed, then the value within the file will be updated. If the $@ variable is set to null within the command script, then the stanza is deleted.

As more and more processes are controlled by stanzas in attribute files, there will be an increasing amount of contention for an individual file (especially with update support). This means that some method to break the attribute files up into smaller components must be provided, in order to allow for distributed file support.

Breaking up the files has the unwanted side effect of separating stanzas representing classes in the inheritance hierarchy from the attribute files that refer to them. Thus, a stanza must be able to refer to definitions in other files. Stanzas refer to those in other files by:

1) explicitly naming the file in which it is contained (<stanza>(<file>));

2) looking in other files listed on the command line, in order;

3) checking in files named attrscan.pcf in the filesystem at the current directory level and "higher" (limited by an environment variable: $ATTRSCAN__TOP).

The order listed is the order in which the files are searched. The first matching stanza is used.

As previously mentioned, the definition of the PCF architecture led to the definition of the Command component. Each Command component will be summarized separately. The features of the PCF architecture can be summarized as follows:

1. A PCF is a system file that can be opened for read or write; it is composed of a set of objects

2. An object is a named collection of attribute value pairs; they can be retrieved either "directly" by a reference or "indirectly" through a selection expression.

3. The selection expression can be based on the object name or other attributes; an unspecified expression selects all objects in the Process Control File.

4. An object can be retrieved for read or for read/write, depending on the state of the access permissions and access list attributes.

5. Encoding an object in a Process Control File with the same name as the PCF allows its access permissions and access list attributes to override equivalent filesystem values for the whole file.

6. Attributes can be inherited through references in the type attribute; inheritance can be multiple and/or hierarchical.

7. A reference requires the object name, a list of PCF names and an inheritance status.

8. The inheritance status can be: a) enabled, b) disabled, or c) unspecified (in which case it defaults to that used to retrieve the referencing object).

9. The PCF name list of a reference can be left unspecified, in which case it defaults to a special environment variable.

The features of the Command architecture are described as follows:

1. Environment variables and attributes are equivalent (hereafter, they will be called variables). Both have a name associated with a value.

2. Variable values can be derived in four ways: (i) as literals, (ii) from variable substitution, (iii) by executing the value and returning standard output, and (iv) as a list or an element of a list.

3. Variable substitution is otherwise treated like most shell language substitutions.

4. Values can be used in any of the four ways specified in "feature" 2; or they can be used as: (i) an executable method, (ii) an embedded object, or (iii) a reference to another object.

5. Interpreted methods are either system commands or other executable variables.

6. Executable values can contain either interpreted or compiled methods; they return an exit code.

7. Embedded object attributes provide for complex attributes and enables attribute level access control.

These features will meet every other requirement listed in the Background section that is not covered by the high level architecture itself. Features 2-4 above have been previously described. Feature 1 is shown in Fig. 8, which shows an environment 106 having variables associated therewith, and an object 108 having attributes associated therewith. The object attributes are searched first and if a match is not found, the variables within the environment are searched. The net effect of this approach is that the system operates as if the environment itself has been inherited.

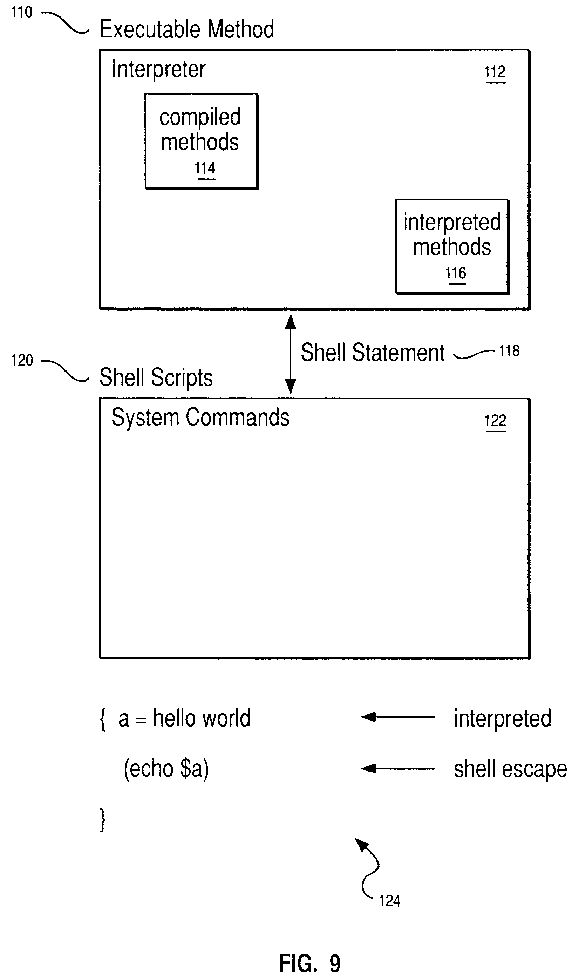

Feature 5 is shown in Fig. 9, and implemented in the syntax notation as shown in Fig. 5a-5f. Interpreted methods 124 are either system commands 122 of the shell script script 120, or are other executable variables at 110. As shown at 124, 'a = hello world' is an executable variable which is interpreted by the interpreter, and '(echo $a)' escapes to the shell script 120 to execute a system command at 122 of 'echo'.

Feature 6 is also shown in Fig. 9, where the executable values at 110 can contain either interpreted methods 116 or compiled methods 114. Here, the resulting effect is that the system is easily extensible.

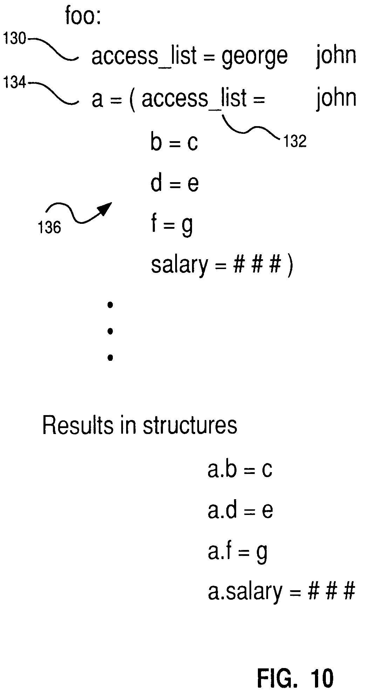

Feature 7 is exemplified in Fig. 10, showing that the object attribute 'access__list' 130 allows users george and john to access 'foo'. However, the embedded object attribute at 132 only allows john to access the underlying structures 136 within the object 'a' 134. Other embedded object attributes are shown at 136. The next section details the architecture of the Process Control and User Interface that together make the Process Control Framework even easier to integrate and use.

Referring again to Fig. 2, the User Interface 15 is, in a sense, the Process Control 17 since what the end user sees is what he will perceive the Process Control Framework to be. Therefore, it is extremely important that the User Interface Architecture provide transparent access to the underlying functions, including System Commands 20 and Process Control Files 19, where required. This goes against the grain of most "friendly" user interface architectures, since they often try to "hide" as much of the system as they can from the user.

There are often good reasons to hide functionality, but there are equally good reasons to make the function obvious. To understand these reasons and the functionality that should be visible, we must understand the user community.

The Process Control Framework is envisioned to have three kinds of users: integrators, developers and managers, each of which will be interested in the Process Control for a different reason. Let us look at the needs of each separately.

The first user of the Process Control Framework will be the toolmaker, whose job it is to set up the processes that are going to be controlled. Remember from the introduction that this requires developing a machine readable state transition diagram of the process from object definitions. Therefore, the product related objects 21 of Fig. 3 and their associated attributes 30 must be determined, along with the tools, such as version control 34, source preparation 36, development build 38, and unit test 40, that move objects from state to state (or, more precisely, use and act upon the attribute values themselves).

An integrator will need to read and write product related objects 21 into Process Control Files 19. Some objects will be high level "parents" in the inheritance hierarchy, hereafter called product class objects or simply class objects. For example, an integrator for the build process 38 of Fig. 3 will create classes such as c__program, c__header, linkable__object and executable__object.

Commonly used attributes 30, such as standard libraries to use when linking, default dependencies (or tools to execute to derive the dependencies) and default build processes will all be set up for the developer to use. Other attributes 30, like functions to compute lines of code or test coverage, would be set up for the managers. Note that the attributes 30 for the developers insure that the process is repeatable; those for the managers make sure that the process is measurable.

To help set up new classes, the integrator will need facilities to copy attributes from a similar class object, and "merge" these into a higher level class object if appropriate. For example, many of the attributes that exist for c__program objects might be shared by a new pascal object (except for the compiler, of course). An astute integrator might create a superclass and call it source__code. The merge routine automatically determines the set of unique attributes for each object in the superclass, using a standard compare and merge programming technique to eliminate attributes that are in common with the union of objects comprising the superclass.

Once the process has been integrated, the developer will become the second user of the Process Control framework. The developer is the one who uses the process to do real work; i.e., produce a product. Where the process is software development and most of the tools are machine executable, the Process Control Framework will make life much easier. Instead of needing to know how to invoke the specific tools, the developer selects objects and executes associated actions.

Selecting objects and executing actions requires the services of both Process Control Files 19 and System Commands 20 of Fig. 2. The actions are much simpler than those required by the integrator, usually just the name of an executable attribute associated with the object(s) selected. For example, a developer would indicate the objects to build and then invoke the build_process attribute.

One major distinction exists between a developer and an integrator. Where the integrator works with classes of objects, the developer works with particular members of the class (also called an instance). For example, a file called "foo.c" is an instance of a c_program class object. The integrator is mainly interested in editing, compiling, linking and testing in the abstract, where the developer wants to do these things for real. Note also that the developer only refers to the classes, and never updates them. The developer will need to create and maintain the instances; therefore, she needs a way to create, update and destroy instance objects as well as select class objects from which to inherit. This means that there are two separate lists of files with which a developer works: those which are reference only (that contain classes) and those which are actively being scanned for selection and action (that contain instances). The User Interface Architecture 15 at Fig. 1 supports modification, storage and selection of these lists by treating the lists exactly like any other PCF and object within the system.

Developers usually invoke actions in one of three ways:

1. They select an object (or set of objects) and attempt to invoke a specific action (or set of actions). This could return an error, not just because the action fails, but also because the object is not ready for that action, since the user asked the system to: "Do these actions to these specific objects."

2. They select either a specific set of objects or an expression for the scan list and invoke the next (default) set of actions. This only returns an error if an action fails, since it is like saying: "Do all the actions that you can to all the objects in this set." Presumably, the objects will reach a state where some external checkpoint terminates automated activity.

3. They invoke a specific set of actions on objects matching an expression (or the entire scan list). This shouldn't return an error either, except when an action fails, since this is the equivalent of saying "Do these actions to every object in this set that is ready."

The Process Control User Interface Architecture supports these three methods. It checks to see that the object is in the proper state for the action, or vice versa. Menus are accessible that show both views: the actions selectable for a set of selected objects, and/or the objects selectable for a set of selected actions.

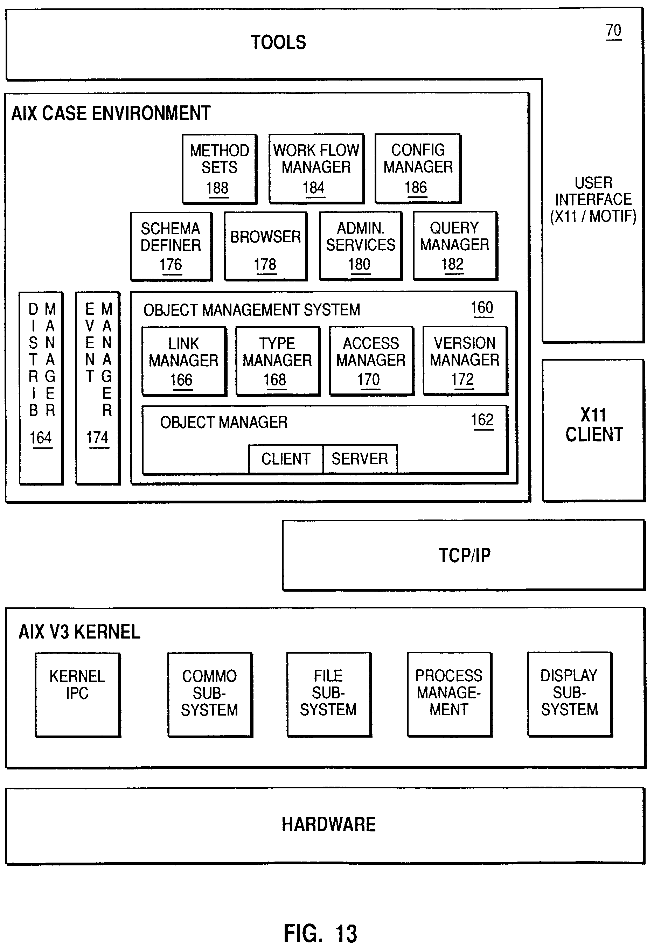

With these three toolkits contained within 15 of Fig. 2 and 70 of Fig. 13, the developer has actually begun producing some products, or at least has gotten them to a "checkpoint" that requires some outside review. This is where the manager comes in.

Tradition puts a manager somewhere outside of the process looking in. To some degree, this is an accurate assessment, since the manager does not seem to create any product related objects. Instead, a manager seems concerned with accessing attributes associated with measurability to determine if it is proper to go on to the next step. For example, a manager might need to "sign off" before the fix to a source file can be forced into the build.

The problem with this view is that this "manager" does not have to be a separate person. She may be the developer herself, or not even be a person at all! For example, lets say that when a program fix compiles successfully and over eighty percent of its code is covered by successful execution of regression testing, then it is OK to include it in the build. In this case, the test and coverage analysis processes help automate the "sign off" function of the manager.

Whether the "sign off" is manual or automatic, it is a policy decision that leads to the definition of the criteria used to determine whether an action is "valid." This always requires an actual person. Thus, the true role of a manager is to create and maintain the policies that govern the process.

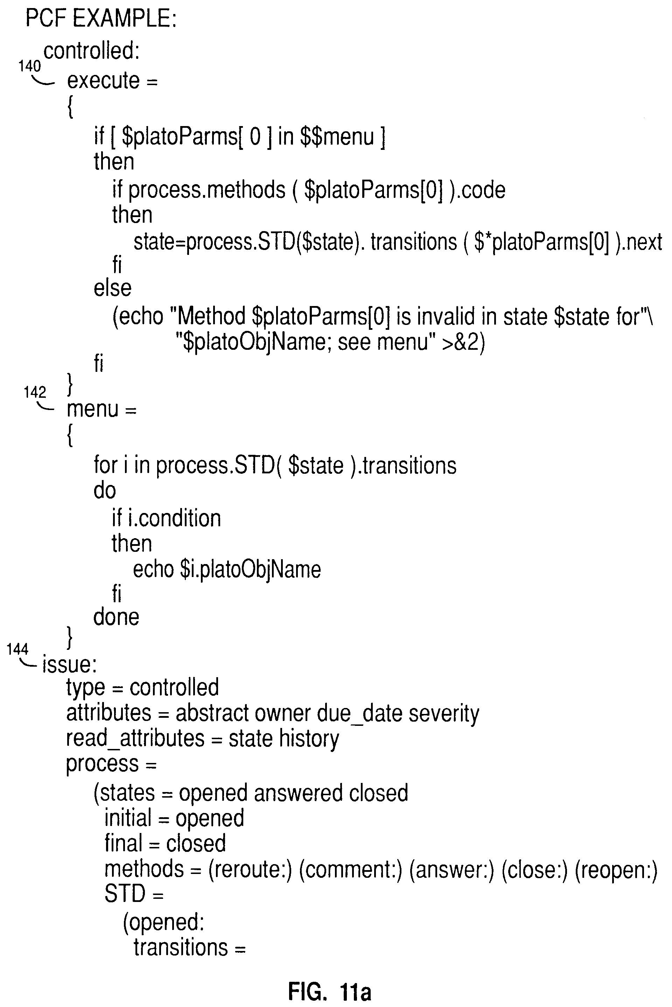

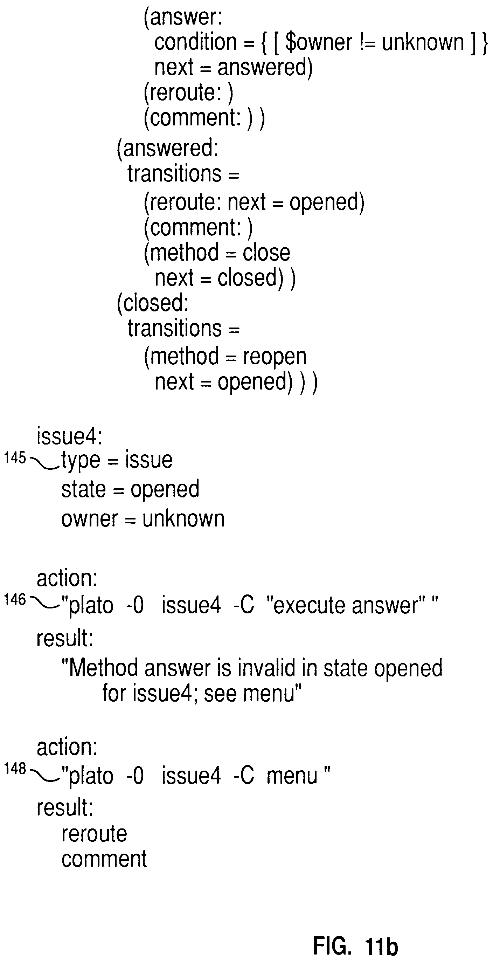

These policies, like everything else having to do with the process, are objects 21 that are maintained in the Process Control Framework. They are "transitions" in the state transition diagram of the process. Basically, they are conditions based on the attributes 30 of product related objects 21. Each condition is mapped to a single action that is permitted when the condition occurs. Referring to Fig. 11a and 11b to detail how this works, the policies are defined within 'issue' 144. 'Menu' 142 echoes to the screen those methods valid for a particular system user. 'Execute' 140 actually performs the state transition if the requested action is valid. Fig 11b shows sample invocation and output for 'execute' at 146 and 'menu' at 148, when issue4 has been defined as shown at 145.

Where the integrator is concerned with maintaining classes of product related objects, the developer is concerned with maintaining instances of product level objects that refer to the classes. A manager is concerned with maintaining policies that refer to both. Once the integrator develops a class with a certain set of attributes and associated actions, the manager can develop a policy that governs when those actions come into play. The policy is activated by a developer during the operations as previously described. Therefore, the manager's job is quite different than that of an integrator or developer. The manager needs a specific set of User Interface Tools 70 of Fig. 13.

The policy objects are similar to tools developed by the integrator - they need to be edited and tested. However, they operate at the same high level as those expressions and actions for a developer. Conditions are based on expressions of attributes; an associated action is usually a single executable attribute from some object. Therefore, a manager needs tools similar to a developer, that allow him to construct expressions and select associated actions. Like an integrator, a manager will need tools to allow him to test the policies developed. The manager needs tools that allow status reports to be taken at any point in the process based on the "measurement" attributes. Actually, the objects that create reports are almost the same as policies, where a selection expression is associated with an action that handles report formatting (presumably developed by the integrator). The only difference is that a report action will not change the state. Once developed, these "reports" are persistent objects as well. Like any other program, they will need both a development and a test environment.

To summarize the user interface, the following is a list of functions that are supported by the User Interface Architecture and the user group with access to that function. It not only summarizes the features, but gives a better picture of how to limit visibility based on the user type:

| FUNCTION | Integrator | Developer | Manager |
|---|---|---|---|
| 1. Maintain product classes | yes | no | no |
| 2. Edit and Test "low level" tools | yes | no | no |
| 3. Select/refer to product classes | yes | yes | yes |
| 4. Create/delete product instances | no | yes | no |
| 5. Update product instances | no | yes | yes |
| 6. Execute product actions | no | yes | no |
| 7. Access product instances | no | yes | yes |
| 8. Maintain/select scan PCF lists | yes | yes | yes |
| 9. Maintain/select reference PCF lists | yes | yes | yes |
| 10. Maintain/select selection expressions | yes | yes | yes |
| 11. Maintain/select object references | yes | yes | yes |
| 12. Maintain/select action lists | yes | yes | yes |
| 13. Maintain/select Policies | no | no | yes |
| 14. Refer to policies | yes | yes | yes |
| 15. Maintain status report | no | no | yes |
| 16. Execute status reports | yes | yes | yes |

At some point, each user type can be considered a "developer." For example, an integrator "develops" classes and low level tools. A "normal" developer works with product related instances. A manager "develops" policies and status reports. Therefore, the developer function is the "real" function always available in any view. The difference is in the objects that are visible and available for execution of product actions (number 6) at any given point.

This idea implies one additional feature: a user is able to create/maintain and select a view that represents the user view of the particular "products" (or groups of products) plus the following objects: a) scan PCF lists, b) reference PCF lists, c) selection expressions, d) object references, e) action lists and f) status reports to execute. To "change hats", a user need only select a different view (each of which is maintained as an object in a user defined PCF file).

The objects visible from a given view can be customized to only those needed for a given task or project. Further, since a view is an object, views can be classed and subclassed as well. The net result is that the Process Control is extremely easy to use, increasing both productivity and quality.

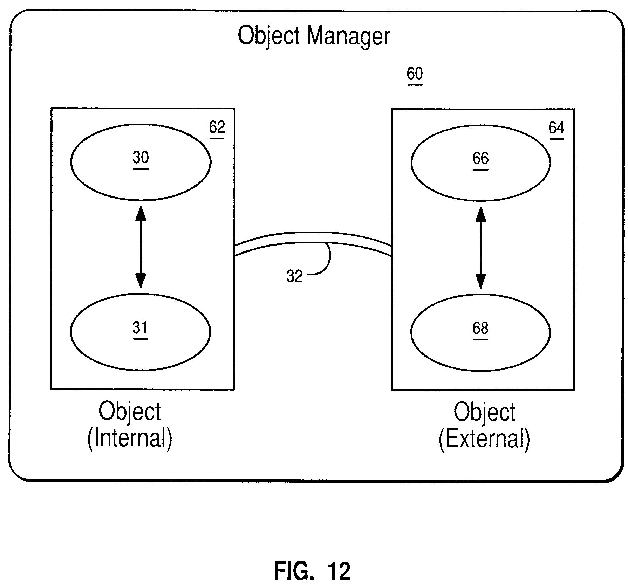

Fig. 12 further illustrates how an entity, or object, manager 60 allows for both internal and external access to an object. Remember that an entity or object 62 has associated therewith both attributes 30, which contain product and control information, and methods 31(e.g. programs to run against an object). Fig. 12 illustrates that an internal object 62 has its own attributes and methods, maintained by the object manager 60, which can be, and in the preferred embodiment are, different from an external object's 64 attributes 66 and methods 68. Communicating or accessing an object is achieved by links 32.

The above description provides three levels of integration. At the user interface level 15 of Fig. 1, standard methods can be invoked on any object registered to the system. The registration process creates the object with attributes that associate an interface representation to the external object. This allows the object to be opened (if editable) or executed (if executable). This representation could include text, graphics, or auditory information.

The second level of integration is achieved by recording process control attributes about the target object in the Process Control File. This allows the user to build and execute custom methods associated with the object(s). The format of an object's internal data structure is not registered or maintained within the object. Therefore, only processes that operate on the PCF object as a whole can be developed.

The third level of integration is achieved when the internal data structure associated with a given target object is stored in the PCF. Then, the Process Control Framework can be used to access specific data structures within the target object. This allows custom methods to be created that bring together related information from multiple target objects in a seamless application. An object manager, to be described hereafter, is used to maintain the internal attributes and data structures necessary to provide each level of integration.

The above described Framework provides the ability to use external objects, in that objects at any level of integration can still be maintained externally to allow free access to other processes not a part of the Framework. Further, as the attribute and method components of objects are separable, multiple implementation approaches can be used for each one. For example, the entity/object manager that maintains the attributes can be implemented using the PCF syntax as disclosed herein, a semantic network, or an object management system. The methods can be implemented via interpreted commands, compiled languages, or a language built into the Framework object manager itself.

Fig. 13 shows a physical model of the AIX CASE environment, which can be viewed as a set of interrelated components that provides base and extended levels of functions for a true integrated project support environment. All these components have an exposed interface for the tools and applications to use. Minimally, this should include C language bindings, but other language binding may be appropriate. The major components of this architectural model will now be discussed in sufficient detail to see how the Process Control Framework would become a part of the larger CASE Environment.

The object management system 160 is the heart of the AIX CASE Environment. It provides the storage, integrity and control that the rest of the environment requires. The object management system can be viewed as consisting of the following components:

- An object manager.
- A link manager.
- A type manager.
- An access manager.
- A version manager.

These components of the AIX CASE Environment object management system are described individually below.

The object manager 162 provides the storage of objects in the AIX CASE Environment object management system. There are two types of objects that the object manager recognizes -- internal objects and external objects. Internal objects are objects that are stored and managed directly by the object manager. External objects are objects that are stored and managed outside of the object manager domain. Specifically, external objects are those objects that reside as separate entities in the AIX file system, including existing AIX Source Code Control Systems. The object manager guarantees the integrity for only internal objects. One of the key aspects of the object manager is object naming. The object naming rules must be constructed carefully to support very large object sets ($10^6$ objects) and, additionally, support object naming across a distributed network environment. Another key aspect of the object manager is performance. Finally, the object manager must view the environment as distributed. The approach selected is to provide a client/server model that uses a message passing scheme through the distribution manager to converse with the other object managers in this distributed environment. The object manager satisfies the requirements for a persistent storage for project information and environment preservation in the AIX CASE Environment.

The link manager 166 manages the relationships between objects in the object management system. The link manager provides facilities to link one object to another object, one object to many other objects, and many objects to one object. The link manager must support a very large number of object relationships within a project's environment ($10^9$ links) and uses the services of the object manager to create, update or delete links. The link manager satisfies the requirement for providing object relationships in the AIX CASE Environment.

The type manager 168 manages the type hierarchy in the AIX CASE Environment. It insures that the specified type hierarchy is enforced and is consistent at all times for all defined objects in the project's environment. The type manager's responsibility is to provide integrity constraints for a specified type hierarchy, automatic object linking (via the link manager), authorization control (via the access manager) and version control (via the version manager) for objects defined in the specified object class type hierarchy. The type manager can be thought of as the "traffic cop" for the object management system. The type manager satisfies the requirements for integrity constraints and environment extendibility (through the addition of new object classes and type hierarchies) in the AIX CASE Environment.

The access manager 170 provides the security authorization control in the AIX CASE Environment. The access manager has the notion of users and groups of users with differing access rights to objects -- none, read-only, read-write, execute, etc. Since users are defined as objects in the AIX CASE Environment, these access rights are properties in the type hierarchy of this object class. The access manager provides the locking mechanism on objects. With the object-oriented model, this results in linking user objects with the physical objects "checked out" to these users. Additionally, the access manager manages the view of mutable and immutable objects in the environment again as specified in the properties of the type hierarchy for the object class. Therefore, the access manager provides the integrity constraints, multiuser access and administrative control requirements for the AIX CASE Environment.

The version manager 172 is required to record the history of change and represent the effect of time for a project's environment. The version manager is based upon the concept of mutable objects. However, as mutable objects change over time, their descendants become mutable objects. A branch type abstract sequence provides this concept of multiple versions of objects. Such a sequence is known as a line of descent. Branches provide support for alternate or variant lines of descent. The main line of descent is the root branch. New branches can be started from any immutable version of an object. A merge operation is also supported to converge two branches into a single line of descent. For standard text objects, the version manager stores these branches as deltas to the lines of descent. However, for other object classes, e.g., graphics, images, binary encoded data, audio, etc., the delta approach is not conducive to conserving storage. Therefore, the version manager has the concept of n-level deep backup copies for these object classes, where n can be from 0 to i, as specified by the user. This maintains the notion of immutable objects and branching. The version manager satisfies the requirements of environment evolution, multiuser access and reproduction and replication of a project's environment for the AIX CASE Environment.

The user interface component 70 provides the common "look and feel" for the tools, applications and the AIX CASE Environment, itself. The user interface component is OSF's MOTIF (Trademark of Open Systems Foundation) user interface visualized through the X-11 client/server model. This user interface component satisfies the requirement for visual integration in the AIX CASE Environment.

The distribution manager 164 is responsible for supporting the AIX CASE Environment in a distributed workstation environment. The distribution manager is a queued message-driven interface and operates in a TCP/IP environment through a standard socket interface. In other words, there are cooperating distribution managers that communicate with each other in this AIX CASE Environment. The distribution manager provides a means to notify the requester on the status of queued messages to guarantee integrity and serialization for the environment. The distribution manager satisfies the environment extendibility and the ability to distribute the persistent storage for project information requirements for the AIX CASE Environment.

The event manager 174 provides the notification mechanism to the AIX CASE Environment. It supports single event to single action model, single event to multiple action model and blocking on multiple events. The event manager is implemented as a message passing system. This allows the event manager to send textual messages to users or data messages to other tools. The event manager 174 is invoked by the type manager 168 on some action when an object's type hierarchy specification requires this notification. The event manager interfaces with the distribution manager 164 to properly send the message(s) to the appropriate destinations. The event manager provides the block for multiple events by instantiating a lock against those objects waiting for an action to complete. The event manager satisfies the requirement for providing event notification in the AIX CASE Environment.

The schema definer 176 is the process by which the system administrator defines the project's environment. With the schema definer, the system administrator defines the object classes, the visible type hierarchy and enrolls tools and applications as objects to the AIX CASE Environment. The schema definer really is a set of "menus" that allow the system administrator to initially define a project's environment and to tailor this environment throughout the life of the project. The schema definer specifies the properties of objects in the environment to the type manager 168, access manager 170 and version manager 172 in the object management system 160. Additionally, the schema definer must recognize the existence of external objects (tools and data) and permit their definition within a project's environment as well. The schema definer satisfies the requirements of integrity constraints, environment preservation, environment extendibility, environment customization and control integration for the AIX CASE Environment.

The "browser" 178 is the means by which the user can view object relationships managed by the object manager 162. It uses the relationships (links) between objects to permit a user to traverse the relationships between objects. The "browser" has a MOTIF graphical user interface where objects are represented by icons and the relationships between objects shown by arcs (lines). The "browser" satisfies the requirement of visually showing object relationships to the user.

The administrative services manager 180 provides the capability to install, backup, restore and maintain the AIX CASE Environment. These facilities can be implemented as a set of utilities that are available to the system administrator. These utilities are constructed in such a manner that they can operate as standalone AIX commands or through a MOTIF user interface with "buttons" and "pull downs" representing the options to be selected. The administrative services manager satisfies the requirement of providing administrative control for the integrated project software environment.

The query manager 182 provides the user the ability to ask questions about the information content of the data maintained by the object manager. The query manager provides the ability to interrogate the object manager 162 regarding object classes, objects, object relationships, type hierarchies and schemas, as well as the overall status of the project. The query manager is simple to use with a MOTIF graphical interface. It allows for the ability to store both the target and the results of a query for the user. The target and results can be viewed as objects in the environment. The query manager satisfies the requirement of providing access to project information.

The work flow manager 184 provides the enforcement of project methodologies and policies. The work flow manager can be viewed as a tool that interacts with the system administrator in setting up and modifying the work flow for the project. The work flow manager interfaces with the type manager 168 in the specification of the methods (tools) to be used in the type hierarchy for object classes. For example, the work flow manager may specify in the object class of C source objects that in order to "check in" a C source object into the object store that it first must compile correctly and pass lint successfully. The work flow manager can be tailored to each project's environment. It supports the range from stringent DoD standards to very relaxed work flow methodologies. The work flow manager satisfies the requirements environment customization, environment evolution, control integration, administrative control and availability.

The configuration manager 186 provides the methods for grouping objects into a configuration or collection that can then be manipulated as a single entity. A MOTIF graphical representation of objects represented by icons that are related together through arcs that define the methods (tools) provide the configuration for this collection of objects. The collection can be treated as an object itself. Collections are a subtype of version in the type hierarchy and can, therefore, support versions on collections. Further, collections can be considered mutable or immutable. Immutable collections contain only immutable objects. Mutable collections can contain one or more mutable objects. The configuration manager satisfies part of the requirements for reproduction and replication of the software project and project reusability.

The method sets 188 are a set of standardized interfaces that provide the mechanism for tool-to-tool data integration. These method sets will grow over time as standards evolve and new data interchange methods are established. Each method can be represented as an object in the object class of methods and typed with the type hierarchy. These method sets satisfy the requirement for data integration between tools and applications.

While we have illustrated and described the preferred embodiments of this invention, it is to be understood that we do not limit ourselves to the precise constructions herein disclosed and the right is reserved to all changes and modifications coming within the scope of the invention as described in the appended claims interpreted by the description.

**Claims**

1. A method for maintaining entities of information in a computer process control environment, said entities having process control attributes and data structures, comprising:

recording said process control attributes by operation of an entity manager;

19

recording said data structures separate from said process control attributes by operation of said entity manager; and

processing said entities in said process control environment, said processing further comprising using said recorded data structures and said recorded process control attributes when accessing said entities.

2. The method of Claim 1 further comprising:

storing said entities of information in a file,

referencing said entities of information by multiple processes, wherein only a single copy of said entity of information is maintained for reference by said multiple processes.

3. The method of claim 2 wherein said multiple processes customize their respective views of said single copy of said entity of information by saving process specific process control attributes.

4. The method of Claim 3 wherein said process specific process control attributes which are saved by each respective multiple process are limited to only those process specific process control attributes which are different from said process control attributes of said entities of information.

5. A method for allowing access to an object in a computer environment by both an internal and an external process, said object having internal attributes and external attributes associated with each respective internal and external process, comprising:

recording said internal and external attributes associated with said object apart from said object;

maintaining an internal link between said object and said internal attributes;

maintaining an external link between said object and said external attributes;

accessing said object by said internal process using said internal link; and

accessing said object by said external process using said external link.

6. The method of Claim 5 wherein said internal attributes are inherited from another object.

7. The method of Claim 5 or 6 wherein said external attributes are inherited from another object.

8. The method of Claim 5, 6 or 7 wherein said objects are maintained in a file.

9. The method of Claim 8 wherein said file is machine readable.

10. A computer system for incorporating software development tools and data into a multi-leveled integrated environment, comprising means providing each of:

a user interface level having objects therein, said objects having attributes, methods, links, and data structures;

a process control level in communication with said user interface level and having an object manager which records process control attributes relating to said objects; and

an internal structure level in communication with said process control level which records said object data structures by the operation of said object manager, wherein said objects at any level of integration can be maintained externally by one or more external processes to allow free access of said objects to said external processes.

**11.** A computer system for incorporating software development tools and data into a multi-leveled integrated environment, comprising means providing each of:

a user interface level having objects therein, said objects having attributes, methods, links, and data structures;

a process control level in communication with said user interface level and having an object manager which records process control attributes relating to said objects;

a client level in communication with said user interface level;

a kernel level having a kernel ipc, a communication subsystem, a file subsystem, a process manager, and a display subsystem, all of which interface with a computer hardware system; and

a communication level in communication with and between said client level and said kernel level, for providing communications between said client level and said kernel level.

14

ATTRIBUTES
30  METHODS
31  LINKS
32

USER INTERFACE 15

PROCESS CONTROL 17

INTERNAL STRUCTURE 23

FIG. 1

14

USER INTERFACE 15

API 16

PROCESS CONTROL 17

API 18   API

PROCESS CONTROL FILE 19   SYSTEM COMMAND 20

PCF OBJECT 21   PCF OBJECT 21   PCF OBJECT 21   SYSTEM FILE 22   SYSTEM FILE 22   SYSTEM FILE 22

FIG. 2

FIG. 3

foo:
  status = dropped
  type  = shell

          •
          •
          •
                    <u>21</u>

30

fi:
  status = dropped
  type  = c_program

          •
          •
          •
                    <u>21</u>

fee:
  status = verified
  type  = shell

          •
          •
          •
                    <u>21</u>

30

fa:
  status = checked out
  type  = c_program

          •
          •
          •
                    <u>21</u>

82

<u>ACTION</u>

build

84

<u>SELECTION EXPRESSION</u>

status = (dropped DD
        (type  = shell || type =
              c_program))

80

FIG. 4

SYNTAX:

process_control_file :: =
    <optional_any_spaces> ¦
    <optional_any_spaces> <object> <process_control_file>

object :: =
    <comment> <newline> ¦
    <name> <attribute_list>

name :: =
    <name_string> <optional_any_spaces> ' : '

attribute_list :: =
    <optional_any_spaces> ¦
    <optional_any_spaces> <attribute> <attribute_list>

attribute :: =
    <comment> <newline> ¦
    <attribute_name_string> <optional_any_spaces> '=' <value_list>

value_list :: =
    <optional_any_spaces> ¦
    <optional_any_spaces> <value> <any_space> <value_list>

value :: =
    ' [ ' <value_list> ' ] ' ¦
    ' ( ' <embedded_object> ' ) ' ¦
    ' { ' <embedded_method> ' } ' ¦
    <simple_value>

embedded_object :: =
    <object> ¦
    <attribute_list>

embedded_method :: =
    <statement_line> ¦
    <statement_line> <newline> <embedded_method>

FIG. 5a

statement_line :: =

    <optional_any_spaces> ¦
    <optional_any_spaces> <comment> ¦
    <optional_any_spaces> <statement> <optional_spaces> ¦
    <optional_any_spaces> <statement> <optional_spaces>
        <comment>

statement :: =

    <if_statement> ¦
    <while_statement> ¦
    <for_statement> ¦
    <visit_statement> ¦
    <break_statement> ¦
    <continue_statement> ¦
    <exit_statement> ¦
    <return_statement> ¦
    <create_statement> ¦
    <commit_statement> ¦
    <destroy_statement> ¦
    <assignment_statement> ¦
    <action_statement>

if_statement :: =

    ' if ' <then_part>
    <elif_list>
    <else_part>
    ' fi '

elif_list :: =

    NULL ¦
    ' elif ' <then_part>
    <elif_list>

then_part :: =

    <optional_spaces> <action_statement> <end_line>
    ' then ' <endline>
    <embedded_method> <end_line>

## FIG. 5b

```
else_part :: =
    NULL ┊
    'else ' <end_line>
    <embedded_method> <end_line>

while_statement :: =
    'while ' <optional_spaces> <action_statement> <end_line>
    'do ' <end_line>
    <embedded_method> <end_line>
    'done '

for_statement :: =
    'for ' <spaces> <attribute_name_string> <spaces>
    'in ' <spaces> <line_list> <end_line>
    'do ' <end_line>
    <embedded_method> <end_line>
    'done '

visit_statement :: =
    'visit ' <spaces> <attribute_name_string> <spaces>
    'in ' <spaces> <line_list> <end_line>
    'do ' <end_line>
    <embedded_method> <end_line>
    'done '

break_statement :: =
    'break ' ┊
    'break ' <spaces> <simple_value>

continue_statement :: =
    'continue ' ┊
    'continue ' <spaces> <simple_value>

exit_statement :: =
    'exit ' ┊
    'exit ' <spaces> <simple_value>

return_statement :: =
    'return ' ┊
    'return ' <spaces> <line_list>
```

FIG. 5c

create_statement :: =
    <object_specifier> 'platoCreate' <spaces> <line_list>
        <end_line> |
    <object_specifier> 'platoCreate' <spaces> <line_list>
        <end_line>
    'with' <line_list>

commit_statement :: =
    <object_specifier> 'platoCommit' |
    <object_specifier> 'platoCommit' <spaces> <line_list>

destroy_statement :: =
    <object_specifier> 'platoDestroy'

object_specifier :: =
    NULL |
    <attribute_name_string> '.'

assignment_statement :: =
    <address_string> <optional_spaces> '=' |
    <address_string> <optional_spaces> '=' <optional_spaces>
        <line_list>

action_statement :: =
    <not_statement> |
    <condition_statement> |
    <shell_statement> |
    <method_statement> |

not_statement :: =
    '!' <optional_spaces> <action_statement>

condition_statement :: =
    '[' <condition_expression> ']'

condition_expression :: =
    <condition_clause> |
    <condition_clause> '||' <condition_expression>

condition_clause :: =
    <sub_expression> |
    <sub_expression> '&&' <condition_clause>

**FIG. 5d**

```
sub_expression :: =
    ' ! ' <sub_expression> |
    ' ( ' <condition_expression> ' ) ' |
    <simple_value> <optional_spaces> <relop> <optional_spaces>
            <simple_value>
relop :: =
    ' = '    |
    ' < '    |
    ' > '    |
    ' != '    |
    ' >= '    |
    ' <= '    |
    ' in '
shell_statement :: =
    ' ( '  <shell_string_list> ' ) '

shell_string_list :: =
    NULL |
    <shell_string>  <shell_string_list>

shell_string :: =
    <reference_string> |
    <shell_statement>
    <any arbitrary characters not including the " ( " or " ) ">

method_statement :: =
    <address_string>  |
    <address_string>  <optional_spaces>  <line_list>

end_line :: =
    <optional_spaces>  <newline>  <any_optional_spaces>  |
    <optional_spaces>  <comment>  <newline> <any_optional_spaces>

comment :: =
    ' # ' <any characters except newlines>

line_list :: =
    <value>  |
    <value>  <spaces>  <line_list>
```

**FIG. 5e**

```
simple_value :: =
    <simple_string>  ¦
    <simple_string>  <simple_value>

simple_string :: =
    <reference_string>  ¦
    <literal_string>    ¦
    <command_string>  ¦
    <quoted_string>   ¦
    <object_reference_string>

reference_string :: =
    ' $ '  <address_string>  ¦
    ' $$ '  <address_string>

address_string :: =
    <address_list>  ¦
    ' { ' <address_token>  <optional_any_spaces>  ' } '
    ' { ' <address_token>  <any_space>  <value_list>  ' } '

address_token :: =
    <optional_any_spaces>  <address_list>

address_list :: =
    <address>  ¦
    <address>  ' . '  <address_list>

address :: =
    <attribute_name_string>  <index_list>   ¦
    <attribute_name_string>  <index_list>  ' ( '  <index_value>  ' ) '

attribute_name_string :: =
    <arbitrary alphanumeric or  ' _ '  characters>

index_list :: =
    NULL  ¦
    ' [ '  <index_value>  ' ] '  <index_list>

index_value :: =
    <optional_any_spaces>  <index>  <optional_any_spaces>
```

FIG.  5f

index :: =
    <name_string> ¦
    <reference_string> ¦
    <command_string>

object_reference_string :: =
    <name_string> ¦
    <name_string> ' { ' <value_list> ' } '

name_string :: =
    <any arbitrary string of alphanumerics, " / ",  " _ ",  or  " . ">

literal_string :: =
    ' \ ' ' <any arbitrary string not including, ' \ ' ' >  ' \ ' '

command_string :: =
    ' ' ' <command_string_list> ' ' '

command_string_list :: =
    NULL ¦
    <command_string_token> <command_string_list>

command_string_token :: =
    <reference_string> ¦
    <any arbitrary string not including ' ' '>

quoted_string :: =
    ' " ' <quoted_string_list> ' " '

quoted_string_list :: =
    NULL ¦
    <quoted_string_token> <quoted_string_list>

quoted_string_token :: =
    <reference_string> ¦
    <command_string> ¦
    <any arbitrary string not including ' " '>

optional_any_spaces :: =
    NULL ¦
    <any_space> <optional_any_spaces>

FIG. 5g

```
any_space :: =
    <space>  ¦
    <newline>

spaces :: =
    <space>  <optional_spaces>

optional_spaces :: =
    NULL   ¦
    <space>  <optional_spaces>

space :: =
    <any white space character except newline>

newline :: =
    ' \n '
```

FIG. 5h

Literal       Output (echo $a)

90 ⟿  A = abcd  ⟹  abcd

92 ⟿  A = $bcd  ⟹  12cd
     b = 12

94 ⟿  A = 'echo 1234' ⟹  1234

96 ⟿  A = '$bcd'  ⟹  $bcd

## FIG. 6

98 ⟿ Old Way  A = "1 2 3 4" ⟹ A = 1

100 ⟿ New Way  A = 1 2 3 4 ⟹ A = 1 2 3 4

## FIG. 7

variables      106
•
•
•
   attributes
    •
    •
    •  108

## FIG. 8

FIG. 9

foo:

130 &#8594; access_list = george    john

134 &#8594; a = ( access_list =        john

&#8594; 132

b = c

d = e

136 &#8594; f = g

salary = # # # )

&#8226;
&#8226;
&#8226;

Results in structures

a.b = c

a.d = e

a.f = g

a.salary = # # #

FIG. 10

```
PCF EXAMPLE:
    controlled:
140
    execute =
      {
          if [ $platoParms[ 0 ] in $$menu ]
          then
            if process.methods ( $platoParms[0] ).code
            then
               state=process.STD($state). transitions ( $*platoParms[0] ).next
            fi
          else
            (echo "Method $platoParms[0] is invalid in state $state for"\
                  "$platoObjName; see menu" >&2)
          fi
142 }
    menu =
      {
          for i in process.STD( $state ).transitions
          do
            if i.condition
            then
               echo $i.platoObjName
            fi
          done
144  }
    issue:
        type = controlled
        attributes = abstract owner due_date severity
        read_attributes = state history
        process =
          (states = opened answered closed
           initial = opened
           final = closed
           methods = (reroute:) (comment:) (answer:) (close:) (reopen:)
           STD =
             (opened:
              transitions =
```

FIG. 11a

```
            (answer:
              condition = { [ $owner != unknown ] }
              next = answered)
            (reroute: )
            (comment: ) )
        (answered:
          transitions =
            (reroute: next = opened)
            (comment: )
            (method = close
              next = closed) )
        (closed:
          transitions =
            (method = reopen
              next = opened) ) )


    issue4:
145 ⌣ type = issue
        state = opened
        owner = unknown


    action:
146 ⌣ "plato -0  issue4  -C "execute answer" "
    result:
        "Method answer is invalid in state opened
            for issue4; see menu"


    action:
148 ⌣ "plato -0  issue4  -C  menu "
    result:
        reroute
        comment
```

## FIG. 11b

Object Manager

60

62

30

31

Object
(Internal)

64

66

68

Object
(External)

32

FIG. 12

**FIG. 13**